# EUROPÄISCHE PATENTSCHRIFT

(11) **EP 3 558 581 B1**
(45) Veröffentlichungstag und Bekanntmachung des Hinweises auf die Patenterteilung: **07.06.2023**
(21) Anmeldenummer: 17811313.0
(22) Anmeldetag: 08.12.2017
(51) Int. Cl.: B23K 26/38, B23K 26/402, B23K 26/03, B23K 26/00, B23K 103/16

(54) **VERFAHREN ZUR BEARBEITUNG EINER SCHNEIDPLATTE SOWIE ENTSPRECHENDE VORRICHTUNG ZUR BEARBEITUNG EINER SCHNEIDPLATTE**
METHOD FOR MACHINING A CUTTING INSERT AND CORRESPONDING DEVICE FOR MACHINING A CUTTING INSERT
PROCÉDÉ POUR USINER UNE PLAQUETTE DE COUPE ET DISPOSITIF CORRESPONDANT POUR USINER UNE PLAQUETTE DE COUPE

(30) Priorität: 20.12.2016 DE 102016225602
(43) Veröffentlichungstag der Anmeldung: 30.10.2019
(73) Patentinhaber: DMG MORI Ultrasonic Lasertec GmbH, 55758 Stipshausen (DE)
(72) Erfinder: REISACHER, Martin, 87435 Kempten (DE); HILDEBRAND, Peter, 87459 Pfronten (DE)
(74) Vertreter: MERH-IP Matias Erny Reichl Hoffmann Patentanwälte PartG mbB
(86) Internationale Anmeldenummer: PCT/EP2017/081997
(87) Internationale Veröffentlichungsnummer: WO 2018/114390

(56) Entgegenhaltungen:
- EP-A1- 1 834 696
- DE-A1-102004 058 868
- DE-A1-102009 044 316
- DE-U1-202005 011 455
- US-A1- 2012 000 893

## Beschreibung

Die vorliegende Erfindung betrifft ein Verfahren und eine Vorrichtung zur Bearbeitung einer Schneidplatte mittels Laser, insbesondere zur Kanten- und/oder Flächenbearbeitung Laser werden im Stand der Technik oftmals als Schneid- bzw. Materialbearbeitungswerkzeuge verwendet.

Aus der DE 10 2005 06 107 A1 ist beispielsweise ein Verfahren zum Schneiden eines Werkstückes mittels eines Lasers bekannt. Bei diesem Verfahren wird die Laserleistung gemessen und die Abtragungsrate des Lasers anhand der gemessenen Laserleistung eingestellt. Hierdurch kann die Abtragungsrate des Lasers sehr genau justiert werden.

In der Halbleitertechnik wird beispielsweise in der US 2007/0084837 A1, ein Verfahren beschrieben, bei welchem die Schichtdicke einer transparenten Schicht, welche auf eine Metalloberfläche aufgetragen ist, bestimmt wird und in Abhängigkeit der Schichtdicke der transparenten Schicht der Laser derart gesteuert wird, dass lediglich diese transparente Schicht abgetragen wird, ohne die darunterliegende Metallschicht zu beschädigen.

Die DE 10 2004 058 868 A1 zeigt eine Vorrichtung und ein Verfahren zur Bearbeitung eines Kraftfahrzeug-Innenverkleidungsteils, wobei die Bearbeitung mittels eines Lasers erfolgt.

Die DE 20 2005 001 455 U1 zeigt eine Vorrichtung zur Bearbeitung eines Werkzeugs mit einem Laser, wobei die Vorrichtung Mittel zur Messung, Speicherung und Berechnung aufweist.

Die EP 1 834 696 A1, die die Grundlage für den Oberbegriff der Ansprüche 1 und 7 formt, zeigt ein Verfahren zur Herstellung eines mehrschichtigen Analyseelements für Flüssigproben mit einem Testfeld zur Analyse der Flüssigproben.

Die US 2012/0000893 A1 zeigt ein Verfahren und ein System zum Abtragen von Schichten eines mehrschichtigen Werkstücks mittels eines Lasers.

Auch bei der Herstellung von Schneidwerkzeugen, wie z.B. Schneidplatten, ist die Kantenbearbeitung mittels Lasers aus dem Stand der Technik bekannt. Derartige Schneidplatten weisen häufig eine Hartstoffschicht auf, die beispielsweise aus einer polykristallinen Diamantschicht (PKD) besteht, die auf einem Substrat ausgebildet ist. Derartige Schneidplatten sind in der Regel Werkstückrohlinge, die entsprechend ihrem späteren Verwendungszweck für Schaftfräser und dergleichen auch als Werkzeugrohlinge bezeichnet werden.

So ist beispielsweise aus der DE 10 2009 044 316 A1 ein Verfahren bekannt, bei dem ein gepulster Laser an einer Kante eines Schneidplattenrohlings entlanggeführt wird und so Schicht für Schicht abgetragen wird, um eine entsprechende Geometrie einer Schneidkante bzw. zu einer der Schneidkante benachbarten Fläche zu gewährleisten.

Der Abtrag erfolgt dabei entsprechend einer Abtragsgeometrie, die vorher in Abhängigkeit der Form des Werkstückrohlings und der gewünschten Geometrie der resultierenden Schneidkante bzw. zugekippten Flächen in dem Bearbeitungsprogramm festgelegt wird. Die Abtragsgeometrie stellt dabei die Differenz zwischen dem Werkstückrohling und der Geometrie des fertig bearbeiteten Werkstücks dar, das die gewünschte Freifläche aufweist, die die Schneidkante beinhaltet.

Auf die Abtragsgeometrie und die Materialbeschaffenheit abgestimmt, wird auch die Steuerung der Laserbearbeitungsvorrichtung, in der Regel eine Werkzeugmaschine, im Rahmen der automatisierten Bearbeitung unter Verwendung des Bearbeitungsprogramms vorgenommen. Bei mehrlagigen Werkstoffen werden zu diesem Zwecke die Laserparameter je nach Werkstoffschicht, die gerade bearbeitet wird, festgelegt. Dies ist erforderlich, da die unterschiedlichen Materialien je nach Beschaffenheit, Dichte, Festigkeit, Absorptionsvermögen, Härte etc. in unterschiedlicher Weise auf den Laserstrahl reagieren. Die Anpassung der Lasersteuerung auf das Material erfolgt dabei in automatisierter Weise, je nach Bearbeitungsposition gemäß Vorgabe des Bearbeitungsprogramms, und wird insbesondere bei einem Schichtwechsel zwischen den unterschiedlich harten Materialien angepasst.

In der Praxis werden aus einem größeren rondenförmigen Rohling zunächst Proben vereinzelt, die dann entsprechend der Vorgabe des Bearbeitungsprogramms einzeln der Bearbeitung mittels Laser unterzogen werden.

Dabei hat es sich in der Praxis erwiesen, dass oftmals Probleme bei der Herstellung von sauberen Freiflächengeometrien zur Schneidflächenerzeugung auftreten.

Die Erfinder der vorliegenden Erfindung haben sich daher eingehend mit dem Problem der Optimierung der Schneidkantengüte zur Bearbeitung von Mehrschichtmaterialien durch Laser beschäftigt und zu diesem Zweck die Vorgänge bei der Bearbeitung des Mehrschichtmaterials mittels Laser genauer analysiert.

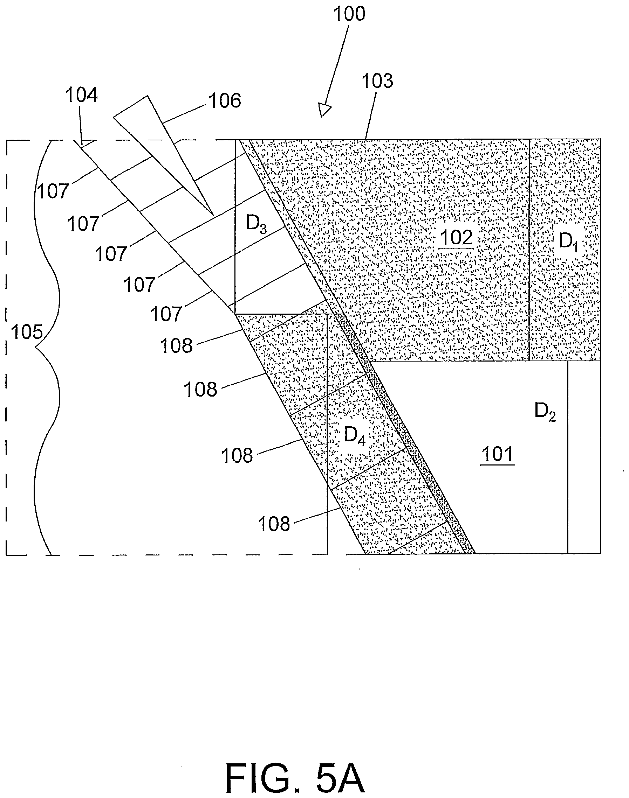

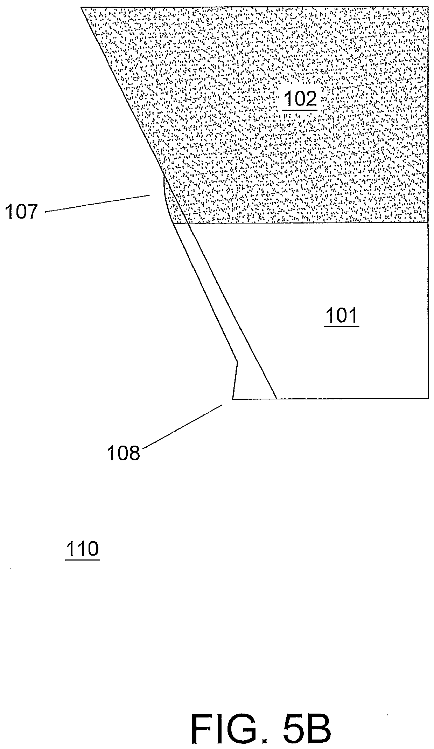

Die dabei identifizierte Problematik ist zur Erläuterung ihrer grundsätzlichen Natur in den Figuren 5a, 5b dargestellt, die Querschnittsansichten eines Schneidplattenrohlings 100 mit einer auf der Oberfläche eines Grundmaterials 101 aufgetragenen Hartstoffschicht 102 zeigen.

Eine Oberfläche des Schneidplattenrohlings 100 entspricht einer Spanflächenvorläuferfläche 103, d.h. einer Fläche, welche in der fertigen Schneidplatte eine Spanfläche zur spanenden Bearbeitung bildet. Diese Spanflächenvorläuferfläche 103 ist über eine Schneidkantenvorläuferkante 104 von einer Freiflächenvorläuferfläche 105 separiert.

Mittels einer Steuereinrichtung wird nun der Laserstrahl 106 entlang der Schneidkantenvorläuferkante 104, wie in Figur 5a dargestellt geführt (z.B. hin und her) bewegt, um so an der Kante Schicht für Schicht, zunächst die Schichten 107 und, nach vollständigem Abtrag der Deckschicht 102, Schichten 108 in Tiefenrichtung abzutragen. Es kann, wie in Figur 5a schematisch durch die gestrichelte Linie dargestellt, die Bearbeitung entweder aus dem vollen Material erfolgen, wobei der Laser senkrecht zur Oberfläche schneidet. In der Praxis ist es jedoch auch zweckmäßig, die Flächen-/ Kantenbearbeitung durch den Laser unter einem Winkel aus einer grob vorgeschnittenen Ronde durchzuführen.

In dem in Figuren 5a und 5b dargestellten Beispiel aus dem Stand der Technik ist die Schichtdicke D1 der Hartstoffschicht 102 größer als die Sollschichtdicke D3, was in der Zeichnung durch die unterschiedlichen Schraffierungen der Schichten veranschaulicht ist.

Somit stimmt die in dem Bearbeitungsprogramm hinterlegte Schichtdicke nicht mit den tatsächlichen Schichtdicken des zu bearbeitenden Schneidplattenrohlings 100 überein, und die Laserparameter werden gemäß dem vorgegebenen Bearbeitungsprogramm beim Übergang von den Schichten 107 zu 108 gemäß der im ursprünglichen Bearbeitungsprogramm hinterlegten Schichtdicken D3 bzw. D4 geändert, obgleich die tatsächlichen Schichtdicken D1 bzw. D2 betragen.

Daher passt die Steuereinrichtung die Steuerung, d. h. die Laserführung und/oder die Laserparameter des Lasers 106 nach Abtragung von einigen Materialschichten entlang der Schneidkantenvorläuferkante 104 schon auf die Materialeigenschaften des Grundmaterials 101 an, obwohl noch nicht alles Hartstoffmaterial 102 abgetragen ist. Deshalb entsteht, wie in Figur 5b schematisch dargestellt, am Übergangsbereich, zwischen der Hartstoffschicht 102 und dem Grundmaterial 101, ein Versatz 107.

Ein weiterer Versatz 108 entsteht auch auf der Rückseite der Schneidplatte 110, weil die entsprechenden Schichtdicken des Schneidplattenrohlings 100 nicht mit den im Bearbeitungsprogramm hinterlegten Werten übereinstimmen.

Im Ergebnis resultieren auch unterschiedliche Schichtdicken der Abtragungsschichten 107 und 108, vgl. Fig. 5a, da, wie oben angesprochen, die Laserstrahlung mit unterschiedlich harten Materialien unterschiedlich interagiert, sodass bei gleichen Lasereinstellungen, d.h. gleichen Laserparametern, unterschiedlich viel Material abgetragen wird.

Ausgehend von dem zuvor beschriebenen Problem, ist es eine Aufgabe der vorliegenden Erfindung, ein Verfahren und eine Vorrichtung anzugeben, mit welchem Schneidkanten und Freiflächen mit höherer Güte aus einem Werkstückrohling erzeugt werden können.

Zur Lösung des vorbeschriebenen Problems, wird ein Verfahren mit den Merkmalen von Patentanspruch 1 und eine Vorrichtung mit den Merkmalen von Patentanspruch 7 angegeben. Vorteilhafte Ausgestaltungen sind in den Unteransprüchen angegeben.

Ein erfindungsgemäßes Verfahren zur Bearbeitung eines mehrschichtigen Werkstückrohlings mittels Laserstrahl weist die Schritte auf: Vorgeben eines Bearbeitungsprogramms zur Bearbeitung des Werkstückrohlings in Abhängigkeit einer Abtragsgeometrie zur Erzeugung einer gewünschten Fläche und/oder Kante durch Laserbearbeitung, Spannen des Werkstückrohlings zur Bearbeitung durch eine Laserbearbeitungsvorrichtung und Positionieren des Werkstückrohlings in einer Messposition, Vermessen von mindestens einer Dicke einer Schicht des mehrschichtigen Werkstückrohlings, Modifizieren des Bearbeitungsprogramms zur Bearbeitung des mehrschichtigen Werkstückrohlings in Abhängigkeit der gemessenen Schichtdicke bei gleichbleibender Abtragsgeometrie und Bearbeitung des aufgespannten Werkstückrohlings unter Verwendung des modifizierten Bearbeitungsprogramms mittels Laser der Laserbearbeitungsvorrichtung zur Erzeugung der gewünschten Flächen- und/oder Kantengeometrie.

Ein wesentlicher Aspekt der Erfindung besteht somit darin, ein zunächst vorgegebenes Bearbeitungsprogramm, das ja bereits die auf einer vorgegebenen Dicke beruhende Abtragsgeometrie des Werkstücks umfasst, nachträglich in aufgespannter Position des Werkstückrohlings noch einmal zu modifizieren, und zwar in Abhängigkeit der (zusätzlichen) Vermessung der Schichtdicke(n) des Werkstückrohlings.

Dies ist insofern ungewöhnlich, als dass herkömmlicherweise ein Bearbeitungsprogramm bereits sämtliche geometrische Informationen umfasst, die für den Abtrag maßgeblich sind.

Der erfindungsgemäße Lösungsansatz weicht also von diesem Prinzip der Trennung Erzeugung des Bearbeitungsprogramms in einem ersten Schritt und Einspannen und Bearbeiten des Werkstücks in einem zweiten Schritt ab und kombiniert diese beiden Schritte, indem der aufgespannte Werkstückrohling gemäß einem modifizierten Bearbeitungsprogramm bearbeitet wird, das nach Aufspannen des Werkstücks und erneutem Vermessen der Schichtdicke(n) der mehrschichtigen Werkstückrohlings modifiziert wurde.

Obgleich diese zusätzliche Maßnahmen auf den ersten Blick als Aufwand erscheinen, liegt ein besonderer Verdienst der Erfindung darin, erkannt zu haben, dass diese zusätzliche Vermessung in ein- oder aufgespannter Position durchaus ohne weiteres auch automatisiert vorgenommen werden kann und dass in diesem Stadium noch eine einfache Modifikation des Bearbeitungsprogramms möglich ist. Dies ist dadurch möglich, dass zur Vermessung und zur maschinen- bzw. programmgesteuerten Abtragsbearbeitung durch den Laser erfindungsgemäß das gleiche Bezugssystem des aufgespannten Werkstücks verwendet werden kann.

Im Ergebnis lässt sich die Güte der hergestellten Freifläche wesentlich erhöhen, da gewährleistet ist, dass das Bearbeitungsprogramm automatisch immer exakt auf die vorliegende Schichtdicke angepasst ist. Auf diese Weise wird es beispielsweise möglich, auch sehr unregelmäßigen Schichtdickenvariationen Rechnung zu tragen, selbst in einem automatisierten Verfahren. Insgesamt kann durch diese Anpassung des Bearbeitungsprogramms gemäß "nachträglicher" Schichtdickenvermessung das oben beschriebene Problem der Bildung eines Versatzes zwischen Haftungsschicht und Basismaterial, wie z.B. in Fig. 5a/b dargestellt, vollständig verhindert oder zumindest wesentlich reduziert werden.

In vorteilhafter Weise werden bei einem Ausführungsbeispiel der vorliegenden Erfindung die Laserparameter in Abhängigkeit der gemessenen Schichtdicke angepasst. Hierzu zählen beispielsweise die Laserleistung, die Laserfrequenz, die Pulsdauer und/oder die Bewegungsgeschwindigkeit des Lasers auf der Oberfläche.

Erfindungsgemäß können jedoch nicht nur die Laserparameter geändert werden, sondern es wird bei einem besonders bevorzugten Ausführungsbeispiel auch die Laserführung angepasst. Dabei kann bevorzugt auch die Laserspur und/oder Fokuslage des Lasers angepasst werden, um zu verhindern, dass dieser aus dem Fokus läuft.

Bei einer besonders vorteilhaften Ausgestaltung des erfindungsgemäßen Verfahrens wird die Dicke der Abtragungsschichten durch den Laser im Bearbeitungsprogramm angepasst. Mit anderen Worten wird auf die exakt vermessene Schichtdicke hin geometrisch im NC-Programm, als wesentlicher Teil des Bearbeitungsprogramms, durch Neuschichten, neuerliche Festlegung der abzutragenden Schichten und deren Maße im Bearbeitungsprogramm auf den Materialwechsel spezifisch reagiert. Diese Maßnahme erfordert nicht unbedingt eine zusätzliche Anpassung der oben genannten Laserparameter, die jedoch, soweit dies bei entsprechender Materialwahl vonnöten sein sollte, ebenfalls angepasst werden können.

An dieser Stelle sei darauf hingewiesen, dass die grundsätzlichen Prinzipien der Laserführung im Rahmen einer Kanten- oder Flächenbearbeitung dem zuständigen Fachmann durchaus geläufig sind. Beispielhaft sei an dieser Stelle auf die Anmeldung 2013/004850 A1 der Anmelderin verwiesen, die ein Verfahren zur Werkstückbearbeitung, insbesondere zur Herstellung von Schneidwerkzeugen und die zugehörige Laserführung, beschreibt, bei der Laser entlang der Kante geführt wird und in Tiefenrichtung Schicht für Schicht entsprechend der Abtragsgeometrie abgetragen wird. Eine ähnliche Beschreibung der Laserführung findet sich auch in der DE 10 2009 044 316 A1, die ebenfalls ein typisches Beispiel für das diesbezügliche Wissen des Durchschnittsfachmanns zur Lasersteuerung darstellt.

Auch die Lage des aufgespannten Schneidplattenrohlings kann in Bezug auf das Koordinatensystem der Vorrichtung vermessen und zusätzlich zu der Lage auch die Kantenpositionen des Schneidplattenrohlings bestimmt werden.

Diese Positionsbestimmung der Ist-Position des Schneidplattenrohlings mit dessen Kantenpositionen kann wichtig sein, um den Schneidplattenrohling in die entsprechende Soll-Position zu verbringen, in der die entsprechende Messung der Schichtdicke und später auch die Laserbearbeitung durchgeführt werden.

Wenn die Lage des Schneidplattenrohlings und dessen Kantenposition genau bekannt sind, können im nachfolgenden Schritt der Schichtdickenmessung gezielt bestimmte Positionen an dem Schneidplattenrohling vermessen werden, d.h. insbesondere kann an einer bestimmten Position der Schneidkantenvorläuferkante die Schichtdicke des Hartstoffmaterials gemessen werden.

Nach der Bestimmung der Lage und den Kantenpositionen des Schneidplattenrohlings kann dieser in eine Messposition verschwenkt werden, in der die Schichtdicke im Wesentlichen in Aufsicht auf die Freiflächenvorlauffläche gemessen wird, sofern dies messtechnisch vonnöten sein sollte.

Alternativ dazu können die Schritte Spannen des Werkstücks und Positionieren in einer Messposition aber auch in einem Schritt durchgeführt werden, falls die Position des ein- oder aufgespannten Werkstückrohlings nach dem Spannen bereits als Messposition verwendet werden kann, ohne dass der Werkstückrohling zusätzlich positioniert werden muss.

Die Schichtdickenmessung und/oder die Lagebestimmung und/oder die Kantenpositionsbestimmung des Schneidplattenrohlings kann mittels einer optischen Messeinrichtung durchgeführt werden.

Eine optische Messeinrichtung kann eine optische Kamera, ein Mikroskop, oder auch jede andere mittels optischer Verfahren arbeitenden Einrichtung sein. Vorzugsweise kann die Bestimmung der Schichtdicke mittels der Kamera anhand des unterschiedlichen Kontrastes der Lagen geschehen. Mittels Bildverarbeitungsmethoden wird die Lage und entsprechend die Schichtdicke anhand des Kontrastes der einzelnen Schicht(en) bestimmt.

Insbesondere kann eine Kamera verwendet werden, welche in Draufsicht auf die Spanflächenvorläuferfläche die entsprechende Lage des Schneidplattenrohlings in Bezug zur Spanneinrichtung feststellt und die entsprechenden Kantenpositionen bestimmt. Zur Lagebestimmung der Kanten wird zum Beispiel die Kamera an den Kanten des Schneidplattenrohlings entlang gefahren.

Nach dieser Bestimmung wird vorzugsweise entweder die Kamera und/oder der Schneidplattenrohling verschwenkt, vorzugsweise um ca. 90° gedreht, sodass die Kamera im Wesentlichen senkrecht auf die Freiflächenvorläuferfläche gerichtet ist und auf optische Weise demnach die Schichtdicke der Hartstoffschicht im Bereich der Schneidkantenvorläuferkante bestimmt.

Nach der Bestimmung der Position des Schneidplattenrohlings und dessen Kanten und nach der Messung der Schichtdicke, wird dann der Laser an den entsprechenden Vorläuferkanten, deren Ortsposition nunmehr bekannt ist, entlanggeführt, um die entsprechende Schneidkante zu erstellen.

Die Schichtdickenmessung kann an mehreren Kantenpositionen der Schneidkantenvorläuferkante durchgeführt werden und die Laserparameter an die gemittelte Schichtdicke in den vermessenen Positionen oder auf die jeweilige Schichtdicke in der entsprechenden Position eingestellt werden.

Hiernach ist es vorteilhaft, dass nicht nur die Schichtdicke an einer einzigen Kantenposition der Schneidkantenvorläuferkante des entsprechenden Grundkörpers gemessen wird, sondern dass mehrere Kantenpositionen vermessen werden.

Als eine Alternative können diese ermittelten Schichtdicken gemittelt und demnach bei der Anpassung der Laserparameter die Informationen der gemittelten Schichtdicken verwendet werden.

Um eine noch höherwertigen Flächen- und/oder Kantengüte zu erhalten, können auch die Laserparameter und/oder Laserführung während des Entlangfahrens an der herzustellenden Kante bzw. nach erfolgtem Abtrag einiger Schichten derart verändert werden, dass diese jeweils an die Schichtdicke in den entsprechenden vermessenen Positionen angepasst werden.

Gemäß eines nebengeordneten Aspektes der Erfindung soll auch eine Laserbearbeitungsvorrichtung, vorzugsweise als Werkzeugmaschine ausgebildet, mit den Merkmalen des Patentanspruchs 7 bereitgestellt werden.

Eine erfindungsgemäße Laserbearbeitungsvorrichtung zur Bearbeitung eines mehrschichtigen Werkstückrohlings mittels Laserstrahl umfasst eine Speichereinrichtung zum Abspeichern eines vorgegebenen Bearbeitungsprogramms zur Bearbeitung des Werkstückrohlings in Abhängigkeit einer Abtragsgeometrie zur Erzeugung einer gewünschten Kanten und/oder Flächengeometrie durch Laserbearbeitung; eine Steuereinrichtung zur Ausführung des Bearbeitungsprogramms zur Bearbeitung des Werkstückrohlings in Abhängigkeit einer Abtragsgeometrie zur Erzeugung einer gewünschten Kanten- und/oder Freiflächengeometrie durch Laserbearbeitung; eine Spanneinrichtung zum Spannen des Werkstückrohlings; eine Positioniereinrichtung zum Positionieren des Werkstückhalters in einer Messposition; eine Messeinrichtung zum Vermessen einer Dicke von mindestens einer Schicht des mehrschichtigen Werkstückrohlings; eine Einrichtung zum Modifizieren des in der Speichereinrichtung gespeicherten Bearbeitungsprogramms zur Bearbeitung des mehrschichtigen Werkstückrohlings in Abhängigkeit der gemessenen Schichtdicke bei gleichbleibender Abtragsgeometrie; und eine Lasereinrichtung zur Bearbeitung des gespannten Werkstücks unter Auswendung des modifizierten Bearbeitungsprogramms mittels Laser zur Erzeugung der gewünschten Kanten- und/oder Flächengeometrie.

Bei einer vorteilhaften Ausführungsform kann die Messeinrichtung zum Vermessen der Schichtdicke und/oder die Lasereinrichtung zum Bearbeiten des aufgespannten Werkstückrohlings gegenüber der Spanneinrichtung um einen Winkelbetrag von bis zu 120° verkippt werden.

Die Steuereinrichtung kann beispielsweise ein PC oder eine Steuereinrichtung einer Werkzeugmaschine sein, über dessen bzw. deren Schnittstelle(n) der entsprechende Laser, die entsprechende Messeinrichtung und die entsprechenden Halte- bzw. Bereitstellungseinrichtungen angesteuert werden.

Die Steuereinrichtung kann dazu eingerichtet sein, gleichzeitig eine Laserbearbeitung und eine Vermessung des Werkstückrohlings in Bezug auf Schichtdicke und/oder Kantenposition und/oder relativer Lage vorzunehmen.

Bei einer bevorzugten Ausführung ist die Einrichtung zum Modifizieren des in der Speichereinrichtung gespeicherten Bearbeitungsprogramms dazu ausgebildet, das in der Speichereinrichtung gespeicherte Bearbeitungsprogramm in automatisierter Weise an die gemessen Schichtdicke anzupassen, wobei Laserparameter, Laserführung, Lasereinstellung und/oder Dicke der Abtragschichten durch den Laser in Abhängigkeit der Schichtdicke nach Messung der Schichtdicke angepasst werden.

Die mittels der erfindungsgemäßen Vorrichtung der 5-Achsbearbeitung mögliche Positionierung des Werkstücks relativ zu dem Messsystem bzw. Laser, erbringt einen wesentlichen Vorteil, da die Laserbearbeitung und das Vermessen in einer Aufspannung durchgeführt werden können. Auf diese Weise ist es möglich, zunächst ein Bearbeitungsprogramm vorzugeben, und dieses dann der Aufspannung des Werkstücks direkt an der Maschine nachträglich anzupassen. Ein aufwändiges Umspannen entfällt dabei.

Weitere Einzelheiten und Vorteile der Erfindung ergeben sich aus nachfolgend erläuterten Ausführungsbeispielen in Verbindung mit der Zeichnung. In dieser zeigen:
- **Figur 1**: einen auf einem Werkstücktisch einer erfindungsgemäßen Laserbearbeitungsvorrichtung aufgespannten Schneidplattenrohling,
- **Figur 2**: eine Ansicht der Schneidplatte aus Figur 1,
- **Figur 3**: eine schematische Seitenansicht der Schneidplatte aus Figur 1,
- **Figuren 4a und b**: eine Seitenansicht eines Schneidplattenrohlings vor dessen Kantenbearbeitung (Figur 4a) und einer Schneidplatte nach Freilegen einer Freifläche mittels Lasers (Figur 4b),
- **Figuren 5a und b**: eine Seitenansicht eines Schneidplattenrohlings vor dessen Kantenbearbeitung (Figur 5a) und einer Schneidplatte nach Freilegen einer Freifläche mittels Lasers (Figur 5b) nach einem im Stand der Technik bekannten Verfahren.

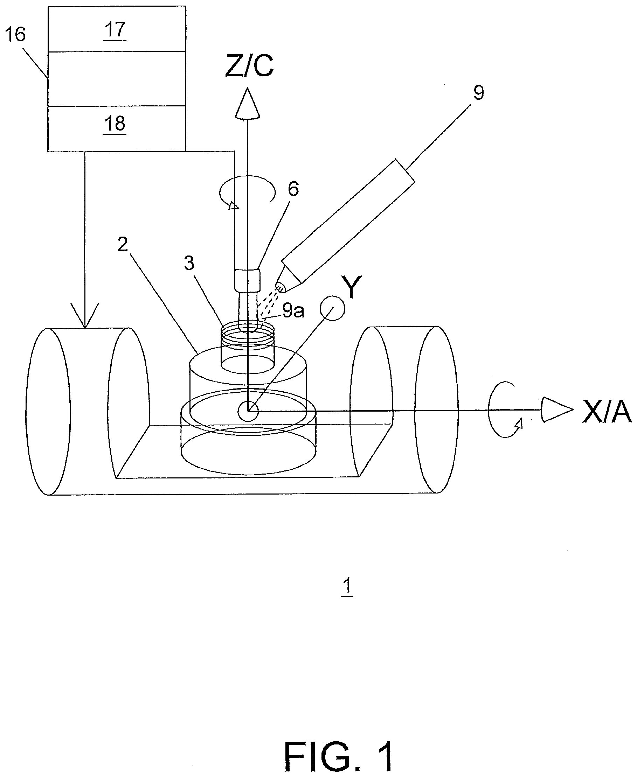

Fig. 1 zeigt ein Ausführungsbeispiel einer erfindungsgemäßen Laserbearbeitungsvorrichtung zur Bearbeitung eines mehrschichtigen Werkstückrohlings 3, der auf einem Werkstücktisch 2 der Laserbearbeitungsvorrichtung 1 aufgespannt ist.

Bei dem vorliegenden Ausführungsbeispiel handelt es sich bei der Laserbearbeitungsvorrichtung um eine Werkzeugmaschine, die für eine 5-Achsbearbeitung eingerichtet ist. Dementsprechend sind in Fig. 1 die drei Linearachsen XYZ und die beiden Rundachsen A, C eingezeichnet. Die Werkzeugmaschine weist eine Steuereinrichtung 16 auf, mittels der ein in der Speichereinrichtung 17 abgespeichertes Bearbeitungsprogramm zur Laserbearbeitung des Schneidplattenrohlings durch einen Laser 9 gesteuert werden kann. Das in der Speichervorrichtung 17 abgespeicherte Bearbeitungsprogramm umfasst zu diesem Zwecke das herkömmliche NC-Programm, das die Abtragsgeometrie beinhaltet, sowie die hierzu notwendige Laserbahnführung und Parametrierung. Dabei sind die Laserparameter zur Steuerung von Lasereinstellungen, wie z. B. Laserleistung, Laserfrequenz, Pulsdauer und Vorschubgeschwindigkeit und Bahngeschwindigkeit des Lasers entsprechend der Abtragsgeometrie vorgegeben.

In Fig. 1 bezeichnet das Bezugszeichen 6 eine Kamera, mittels derer die Lageposition der zu bearbeitenden Schichten des Werkstückrohlings 3 sowie die Position des Rohlings relativ auf dem Werkstücktisch ermittelt werden kann. Somit kann bei dem vorliegenden Ausführungsbeispiel die Werkzeugmaschine die Lage der Schneidplattenrohlinge automatisch vermessen und gleichzeitig den Laser entsprechend dieser Positionsausrichtung steuern. Auf diese Weise vereint die Werkzeugmaschine des vorliegenden Ausführungsbeispiels die moderne 5-Achs-CNC-Bearbeitung mittels Laser mit der Vermessung des Werkstücks. Auf diese Weise können Schneidkante, Freiwinkelspanleitstufen in Schneidplatten und Schaftfräsern, insbesondere aus PKD oder CVD, in einer Aufspannung vermessen und bearbeitet werden, sodass durch das erfindungsgemäße Verfahren zusätzlich die Produktivität wesentlich erhöht wird. Bei dieser Art der Bearbeitung kann der Freiwinkel in weiten Grenzen frei zwischen 9 und 35° variiert werden. Der minimale Schneidkantenradius kann bis zu 1 µm betragen.

Aufgrund der exakten Steuerung gemäß der tatsächlich vorliegenden Schichtdicke ergeben sich optimierte Schneidkanten ohne Ausbrüche, was erheblich zur Standzeitverlängerung der resultierenden Werkzeuge beitragen kann, ohne dass Einbußen im Hinblick auf Schneidkantenradius oder Freiwinkel hingenommen werden müssen.

Die Steuereinrichtung weist zum Zwecke der Anpassung des Bearbeitungsprogramms eine automatische Programmgenerierungseinrichtung 18 auf, die nicht nur das ursprüngliche Bearbeitungsprogramm aus 3D CAD-Daten erstellen kann, sondern das Bearbeitungsprogramm nachträglich anhand der gemessenen Schichtdicken modifizieren kann, auch in automatisierter Weise.

Durch einschlägige Bildverarbeitungsalgorithmen, die ebenfalls in der Speichereinrichtung 17 gespeichert sind und von der Steuereinrichtung 16 ausgeführt werden, können anhand der Kontraste der unterschiedlichen Werkstoffschichten des Schneidkantenrohlings exakt die richtige relative Schneidkantenposition ermittelt werden. Durch die Verfahrbarkeit im Rahmen der 5-Achsbearbeitung ist es bei der erfindungsgemäßen Vorrichtung ohne weiteres möglich, dass der Schneidplattenrohling zur Vermessung um 90° verkippt wird, sodass die Kamera direkt auf den Seitenbereich gerichtet ist.

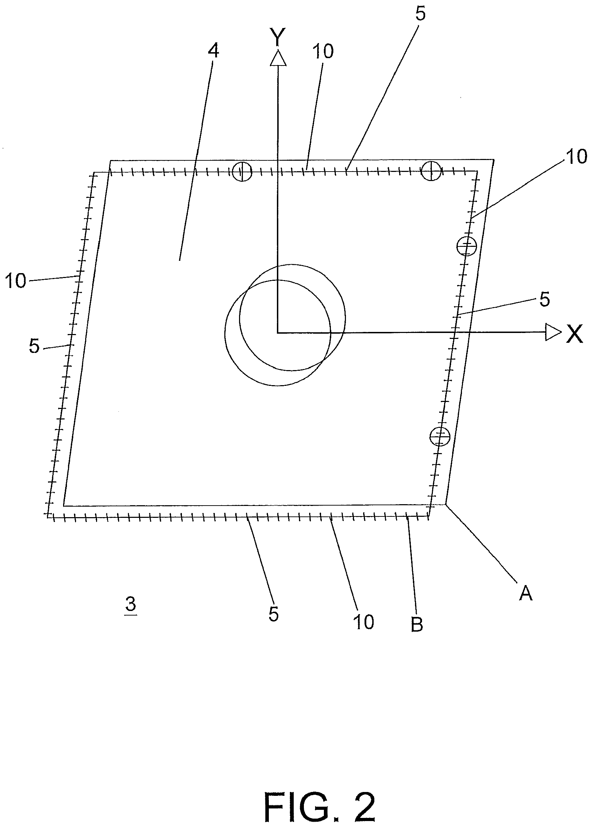

In Figur 2 ist eine Ansicht des Schneidplattenrohlings von oben dargestellt, wobei die Position A einer Soll-Lage auf dem Werkstücktisch 2 entspricht und die Position B (mit Querstrichen markierte Kanten) einer Ist-Lage.

Das Bildfeld der Kamera 6 ist derart bemessen, dass mittels dieser Kamera 6 der Schneidplattenrohling 3, d.h. die Spanflächenvorläuferfläche 4 abgerastert wird bzw. die Kamera an den Kanten entlang gefahren wird und mittels Bildverarbeitung die Kantenposition und die Lage des entsprechenden Schneidplattenrohlings 3 mit hoher Genauigkeit bestimmt wird.

Nach Bestimmung der Position wird der Schneidplattenrohling von der Ist-Position B in die Soll-Position A verbracht, zum Beispiel durch Verfahren bzw. Verkippen des Werkstücktisches 2.

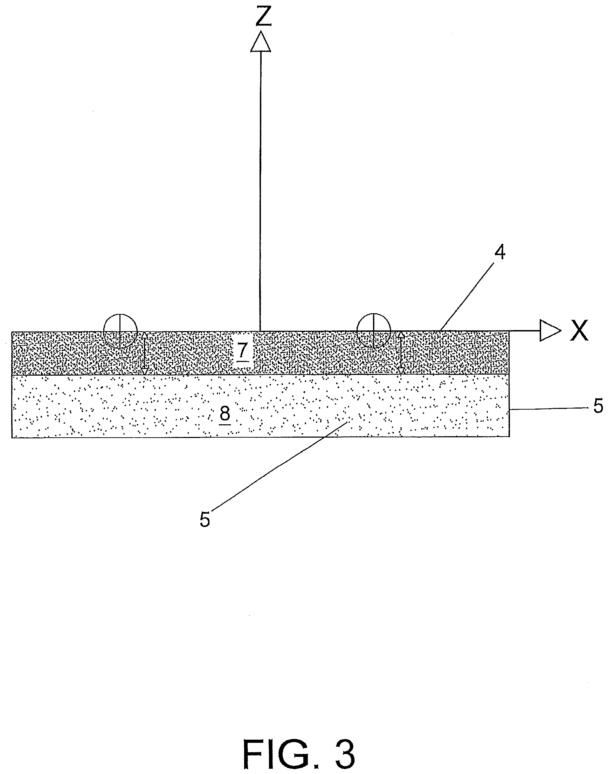

Hiernach werden, wie schematisch in Figur 3 dargestellt, die Kamera 6 und der Schneidplattenrohling 3 in Bezug aufeinander um 90° verschwenkt, sodass die Kamera 6 im Wesentlichen senkrecht auf die Freiflächenvorläuferfläche 5 gerichtet ist. Sowohl in Figur 2 als auch in Figur 3 sind die Positionen, an denen die jeweilige Kanten- bzw. Schichtdicken-Bestimmung mit der Kamera durchgeführt wird, mit einem durchkreuzten Kreis markiert.

Die Kamera 6 detektiert über einschlägige Bildvearbeitungsalgorithmen anhand des unterschiedlichen Kontrastes dieser Schichten die Hartstoffschicht 7 und das Grundmaterial 8 und die Steuereinrichtung kann somit die Schichtdicke der Hartstoffschicht 7 exakt bestimmen.

Bei diesem Ausführungsbeispiel wird sowohl die Bestimmung der Lage des Schneidplattenrohlings 3, dessen Kantenpositionen als auch die Schichtdicke der Hartstoffschicht mittels derselben Kamera 6 in einer Aufspannung des Werkstückrohlings durchgeführt.

Die Kamera 6 kann verschwenkbar gelagert sein und/oder die gesamte Positionier-einrichtung oder nur Teile davon, wie z.B. der Werkstücktisch 2. So wird gewährleistet, dass der Schneidplattenrohling 3 im Verhältnis zur Kamera 6 gekippt werden kann.

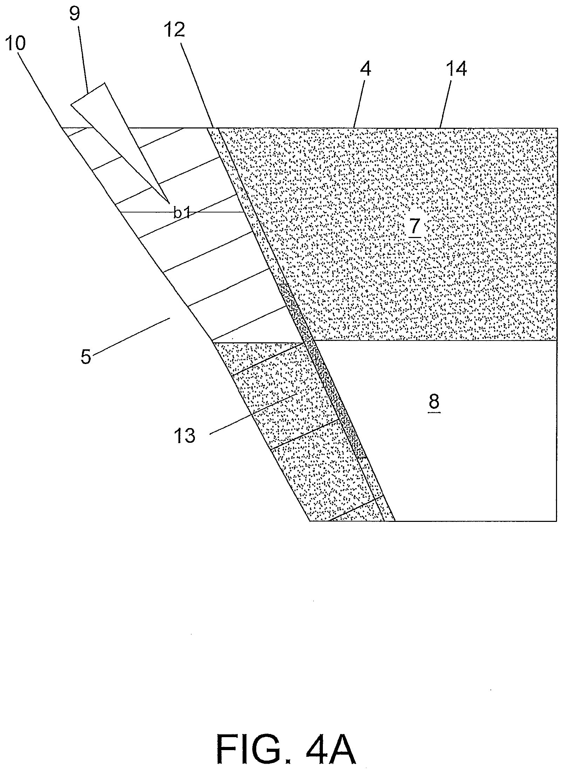

Nachdem die Position des Schneidplattenrohlings 3 auf dem Werkstücktisch 2 und dessen Kantenlage und auch dessen Schichtdicke der Hartstoffschicht bekannt sind, wird nun ein in den Figuren 2 und 3 nicht dargestellter Laserstrahl, welcher in Figur 4a mit Bezugszeichen 9 versehen ist, von der Seite der Spanflächenvorläuferfläche 4 des Schneidplattenrohlings 3 auf einen Bereich der Schneidplattenvorläuferkante 10 (vgl. Figur 4a) gerichtet und entlang der Schneidkantenvorläuferkante 10 im Wesentlichen parallel zur Freiflächenvorläuferfläche 11 (vgl. Figur 4a) geführt. Hierbei kann der Laser bewegt und/oder der Schneidplattenrohling mithilfe der in Fig. 1 dargestellten Positioniereinrichtung des Werkstücktisches bewegt werden.

In Figur 4a ist eine Querschnittsansicht des Schneidplattenrohlings 3, in der jeweils die Schneidkantenvorläuferkante 10, die Freiflächenvorläuferflächen 5 und die Spanflächenvorläuferfläche 4, die an dem Schneidplattenrohling 3 unter einem vorgegebenen Winkel vor der Kantenbearbeitung ausgebildet sind, und jeweils die Schneidkante 12, die Freifläche 13 sowie die Spanfläche 14, die bei der fertigen Schneidplatte 11 vorgesehen sind, schematisch dargestellt sind.

Wie in Figur 4a dargestellt, wird der Laserstrahl 9 im Bereich der Schneidkantenvorläuferkante 10 entlang dieser geführt (senkrecht zur Papierebene) und trägt Material der Breite b1 in Längsrichtung zu der Schneidkantenvorläuferkante 10 Schicht für Schicht (in Tiefenrichtung) ab.

Wenn der Laser an der Grenzfläche zwischen Hartstoffschicht 7 und Grundmaterial 8 angekommen ist, werden auf Basis der gemessenen Schichtdicke der Hartstoffschicht 7 die Laserspur, die Fokuslage und die Dicke der Abtragungsschicht, gemäß Bearbeitungsprogramm von der in Fig. 1 dargestellten Steuereinheit 16 geändert und an die Materialeigenschaften des Grundmaterials 8 angepasst.

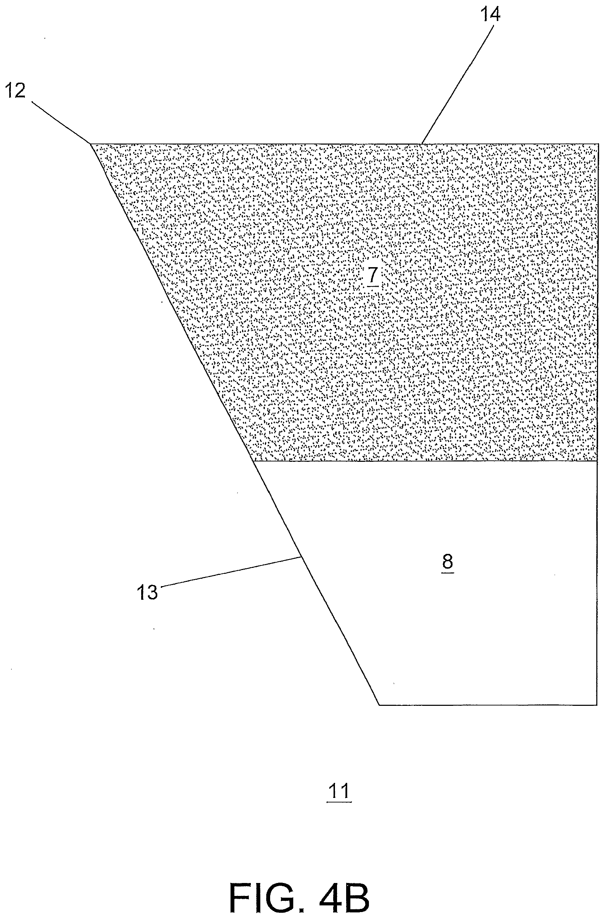

Durch die Abtragung der Materialbreite b1 wird die in Figur 4b in deren Querschnittsansicht schematisch dargestellte fertige Schneidplattengeometrie 11 mit der Spanfläche 14, der Freifläche 13 sowie der Schneidkante 12 erzeugt.

Indem die Laserführung anhand der Schichtdickeninformation an den jeweiligen Schneidplattenrohling 3 angepasst wird, lässt sich ein vergleichsweise geringer Versatz erzeugen oder wie in Figur 4b dargestellt, ein Versatz zwischen Hartstoffschicht 7 und Grundmaterial 8 vollständig vermeiden.

Die Hartstoffschicht besteht vorzugweise aus polykristallinem Diamant, weitere Hartstoffmaterialien können sein: kubisches BN, TiC, TiV WC, TaC. Die Hartstoffschicht ist vorzugsweise eine Keramikschicht.

Als Grundmaterial ist vorzugsweise ein Hartmetall vorgesehen. Materialien für die für das Grundmaterial können sein: gehärteter Stahl, hochfeste Legierungen.

Die Dicke der Hartstoffschicht beträgt vorzugsweise zwischen 30 und 1000 µm, insbesondere 50 und 800 µm, bevorzugt 100 bis 700 µm, insbesondere ca. 400 µm.

Als Alternativen zu einer einzigen Schicht eines Grundmaterials können auch zwischen dem Grundmaterial 8 und der Hartstoffschicht 7 eine oder mehrere weitere Schichten vorgesehen sein. In diesem Fall können die Laserparameter bzw. Laserführung des Bearbeitungsprogramms eben an die Dicke zumindest einer oder mehrerer, oder jeder entsprechenden Schicht angepasst werden und ein analoges Verfahren, wie es zuvor für das zweischichtige Material beschrieben ist, durchgeführt werden.

### Bezugszeichenliste

- 1: Kantenbearbeitungseinrichtung
- 2: Werkstücktisch
- 3: Werkstückrohling
- 4: Spanflächenvorläuferfläche
- 5: Freiflächenvorläuferfläche
- 6: Kamera
- 7: Hartstoffschicht
- 8: Grundmaterial
- 9: Laser
- 9a: Laserstrahl
- 10: Schneidkantenvorläuferkante
- 11: Schneidplatte
- 12: Schneidkante
- 13: Freifläche
- 14: Spanfläche
- 15: Grenzfläche
- 16: Steuereinrichtung
- 17: Speichereinrichtung
- 18: Bearbeitungsprogrammgenerierungseinheit
- 100: Schneidplattenrohling
- 101: Grundmaterialschicht
- 102: Hartmetallschicht
- 103: Spanflächenvorläuferfläche
- 104: Schneidkantenvorläuferkante
- 106: Laserstrahl
- 107: Versatz
- 108: Versatz
- B: Ist-Position
- A: Soll-Position
- b1: Materialbreite

## Patentansprüche

1. Verfahren zur Bearbeitung eines mehrschichtigen Werkstückrohlings (3) mittels Laserstrahl mit den Schritten:
Vorgeben eines Bearbeitungsprogramms zur Bearbeitung des Werkstückrohlings in Abhängigkeit einer Abtragsgeometrie zur Erzeugung einer gewünschten Kanten- und/oder Flächengeometrie (13) durch eine Laserbearbeitungsvorrichtung, das Verfahren ist **gekennzeichnet durch**:
Spannen des Werkstückrohlings in der Laserbearbeitungsvorrichtung und Positionieren des Werkstückhalters in eine Messposition
Vermessen einer Dicke von mindestens einer der Schichten des mehrschichtigen Werkstückrohlings (3);
Modifizieren des Bearbeitungsprogramms zur Bearbeitung des mehrschichtigen Werkstückrohlings (3) in Abhängigkeit der vermessenen Schichtdicke bei gleichbleibender Abtragsgeometrie; und
Bearbeiten des aufgespannten Werkstückrohlings (3) unter Anwendung des modifizierten Bearbeitungsprogramms durch einen Laser der Laserbearbeitungsvorrichtung zur Erzeugung der gewünschten Kanten- und/oder Flächengeometrie (13) mit Schneidkante (12).

2. Verfahren zur Bearbeitung eines mehrschichtigen Werkstückrohlings mittels Laserstrahl gemäß Patentanspruch 1, **dadurch gekennzeichnet, dass** der Schritt Modifizieren des Bearbeitungsprogramms den Schritt Anpassen der Lasersteuerung an die gemessene Schichtdicke beinhaltet umfasst.

3. Verfahren zur Bearbeitung eines mehrschichtigen Werkstückrohlings mittels Laserstrahl gemäß Patentanspruch 2, **dadurch gekennzeichnet, dass** der Schritt Modifizieren des Bearbeitungsprogramms eine Anpassung der Laserfokussierung in Abhängigkeit der gemessenen Schichtdicke umfasst derart, dass der Laser nicht aus dem Fokus läuft.

4. Verfahren zur Bearbeitung eines mehrschichtigen Werkstückrohlings mittels Laserstrahl gemäß einem der vorliegenden Patentansprüche, **dadurch gekennzeichnet, dass** der Schritt Modifizieren des Bearbeitungsprogramms eine Anpassung eines oder mehrerer Laserparameter und/oder der Laserführung in Abhängigkeit der gemessenen Schichtdicke umfasst.

5. Verfahren zur Bearbeitung eines mehrschichtigen Werkstückrohlings mittels Laserstrahl gemäß Patentanspruch 1 oder 2 **dadurch gekennzeichnet, dass** der Schritt Modifizieren des Bearbeitungsprogramms den Schritt Anpassen der Abtragschichtdicke durch den Laser umfasst.

6. Verfahren zur Bearbeitung eines mehrschichtigen Werkstückrohlings mittels Laserstrahl gemäß einem der vorliegenden Patentansprüche **dadurch gekennzeichnet, dass** der Werkstückrohling ein mit einem Hartstoff beschichteter Schneidplattenrohling ist und das Verfahren den Schritt Bestimmen der Kantenposition einer Schneidkante des Schneidplattenrohlings vor dem Messen der Schichtdicke umfasst, wobei die Schritte Vermessen und Bearbeiten in der selben Position des gespannten Werkstückrohlings vorgenommen werden

7. Laserbearbeitungsvorrichtung zur Bearbeitung eines mehrschichtigen Werkstückrohlings mittels Laserstrahl mit
einer Speichereinrichtung zum Abspeichern eines vorgegebenen Bearbeitungsprogramms zur Bearbeitung des Werkstückrohlings in Abhängigkeit einer Abtragsgeometrie zur Erzeugung einer gewünschten Kanten und/oder Flächengeometrie durch Laserbearbeitung;
einer Steuereinrichtung zur Ausführung des Bearbeitungsprogramms zur Bearbeitung des Werkstückrohlings in Abhängigkeit einer Abtragsgeometrie zur Erzeugung einer gewünschten Kanten- und/oder Freiflächengeometrie durch Laserbearbeitung;
eine Spanneinrichtung zum Spannen des Werkstückrohlings, die Laserbearbeitungsvorrichtung ist **gekennzeichnet durch**:
eine Positioniereinrichtung zum Positionieren des Werkstückhalters in einer Messposition;
eine Messeinrichtung zum Vermessen einer Dicke von mindestens einer Schicht des mehrschichtigen Werkstückrohlings;
einer Einrichtung zum Modifizieren des in der Speichereinrichtung gespeicherten Bearbeitungsprogramms zur Bearbeitung des mehrschichtigen Werkstückrohlings in Abhängigkeit der gemessenen Schichtdicke bei gleichbleibender Abtragsgeometrie; und
eine Lasereinrichtung zur Bearbeitung des gespannten Werkstücks unter Anwendung des modifizierten Bearbeitungsprogramms mittels Laser zur Erzeugung der gewünschten Kanten- und/oder Flächengeometrie (12, 13).

8. Lasereinrichtung zum Bearbeiten eines mehrschichtigen Werkstückrohlings gemäß Patenanspruch 7 **dadurch gekennzeichnet, dass** die Messeinrichtung zum Vermessen der Schichtdicke und/oder die Lasereinrichtung zum Bearbeiten des aufgespannten Werkstückrohlings gegenüber der Spanneinrichtung um einen Winkelbetrag von bis zu 120° verkippt werden kann.

9. Laserbearbeitungsvorrichtung zur Bearbeitung eines mehrschichtigen Werkstückrohlings gemäß Patentanspruch 7 oder 8 **dadurch gekennzeichnet, dass** die Steuereinrichtung (16) dazu eingerichtet ist, gleichzeitig eine Laserbearbeitung und eine Vermessung des Werkstückrohlings in Bezug auf die Schichtdicke und/oder Kantenposition und/oder relativer Lage vorzunehmen.

10. Laserbearbeitungsvorrichtung zur Bearbeitung eines mehrschichtigen Werkstückrohlings nach einem der Ansprüche 8 oder 9 **dadurch gekennzeichnet, dass** die Einrichtung (18) zum Modifizieren des in der Speichereinrichtung gespeicherten Bearbeitungsprogramms dazu ausgebildet ist, das in der Speichereinrichtung (17) gespeicherte Bearbeitungsprogramm in automatisierter Weise an die gemessene Schichtdicke anzupassen, wobei Laserparameter, Laserführung, Lasereinstellung und/oder Dicke der Abtragschichten durch den Laser in Abhängigkeit der Schichtdicke nach Messung der Material-Schichtdicke angepasst werden.

## Claims

1. A method for machining a multi-layered workpiece blank (3) using a laser beam, comprising the steps of:
specifying a machining program for machining the workpiece blank according to an ablation geometry in order to generate a desired edge and/or surface geometry (13) by means of a laser machining device, said method being **characterized by**:
clamping the workpiece blank in said laser machining device and positioning the workpiece holder in a measuring position;
measuring a thickness of at least one of the layers of the multi-layered workpiece blank (3);
modifying the machining program in order to machine the multi-layered workpiece blank (3) according to the measured layer thickness with a consistent ablation geometry; and
machining the clamped workpiece blank (3) using the modified machining program via a laser of said laser machining device in order to generate the desired edge and/or surface geometry (13) with a cutting edge (12).

2. The method for machining a multi-layered workpiece blank by means of a laser beam according to claim 1, **characterized in that** the step of modifying the machining program includes the step of adapting the laser control to the measured layer thickness.

3. The method for machining a multi-layered workpiece blank using a laser beam according to claim 2, **characterized in that** the step of modifying the machining program includes adapting laser focusing as a function of the measured layer thickness such that the laser does not run out of focus.

4. The method for machining a multi-layered workpiece blank using a laser beam according to one of the preceding claims, **characterized in that** the step of modifying the machining program includes adapting one or more laser parameters and/or laser guidance as a function of the measured layer thickness.

5. The method for machining a multi-layered workpiece blank by means of a laser beam according to claim 1 or 2, **characterized in that** the step of modifying the machining program includes the step of adjusting the ablation layer thickness to be ablated by the laser.

6. The method for machining a multi-layered workpiece blank by means of a laser beam according to one of the preceding claims, **characterized in that** the workpiece blank is a cutting insert blank coated with a hard material and said method comprises the step of determining the edge position of a cutting edge of the cutting insert blank before measuring the layer thickness, wherein the steps of measuring and machining are carried out in the same position of the clamped workpiece blank.

7. A laser machining device for machining a multi-layered workpiece blank by means of a laser beam, comprising
a memory device for storing a predetermined machining program for machining the workpiece blank according to an ablation geometry in order to generate a desired edge and/or surface geometry by laser machining;
a control device for executing the machining program for machining the workpiece blank according to an ablation geometry in order to generate a desired edge and/or surface geometry by laser machining;
a clamping device for clamping the workpiece blank;
said laser machining device being **characterized by**:
a positioning device for positioning the workpiece holder in a measuring position;
a measuring device for measuring a thickness of at least one layer of the multi-layered workpiece blank;
a device for modifying the machining program stored in the memory device for machining the multi-layered workpiece blank according to the measured layer thickness with a consistent ablation geometry; and
a laser device for machining the clamped workpiece using the modified machining program by means of a laser in order to generate the desired edge and/or surface geometry (12, 13).

8. The laser device for machining a multi-layered workpiece blank according to claim 7, **characterized in that** the measuring device for measuring the layer thickness and/or the laser device for machining the clamped workpiece blank is tiltable relative to the clamping device by an angle of up to 120°.

9. The laser machining device for machining a multi-layered workpiece blank according to claim 7 or 8, **characterized in that** the control device (16) is configured to simultaneously carry out laser machining and a measurement of the workpiece blank with respect to the layer thickness and/or edge position and/or relative position.

10. The laser machining device for machining a multi-layered workpiece blank according to one of claims 8 or 9, **characterized in that** the device (18) for modifying the machining program stored in the memory device is configured to adapt the machining program stored in the memory device (17) in an automated manner to the measured layer thickness, wherein laser parameters, laser guidance, laser setting and/or thickness of the ablation layers to be ablated by the laser are adapted as a function of the layer thickness after measuring the material layer thickness.

## Revendications

1. Procédé de traitement d'une ébauche de pièce à usiner (3) multicouche au moyen d'un faisceau laser avec les étapes de :
prédéfinition d'un programme de traitement pour traiter l'ébauche de pièce à usiner en fonction d'une géométrie d'abrasion afin de produire une géométrie de bords et/ou de surfaces (13) souhaitée via un dispositif de traitement laser, le procédé est **caractérisé par** :
le serrage de l'ébauche de pièce à usiner dans le dispositif de traitement laser et le positionnement du porte-pièce à usiner dans une position de mesure
la mesure d'une épaisseur d'au moins une des couches de l'ébauche de pièce à usiner (3) multicouche ;
la modification du programme de traitement pour traiter l'ébauche de pièce à usiner (3) multicouche en fonction de l'épaisseur de couche mesurée dans des conditions de géométrie d'abrasion constante ; et
le traitement de l'ébauche de pièce à usiner (3) serrée en utilisant le programme de traitement modifié via un laser du dispositif de traitement laser pour produire la géométrie de bords et/ou de surfaces (13) souhaitée avec un bord tranchant (12).

2. Procédé de traitement d'une ébauche de pièce à usiner multicouche au moyen d'un faisceau laser selon la revendication 1, **caractérisé en ce que** l'étape de modification du programme de traitement comprend l'étape d'ajustement de la commande laser à l'épaisseur de couche mesurée.

3. Procédé de traitement d'une ébauche de pièce à usiner multicouche au moyen d'un faisceau laser selon la revendication 2, **caractérisé en ce que** l'étape de modification du programme de traitement comprend un ajustement de la focalisation laser en fonction de l'épaisseur de couche mesurée de sorte que le laser ne sorte pas du foyer.

4. Procédé de traitement d'une ébauche de pièce à usiner multicouche au moyen d'un faisceau laser selon l'une des revendications précédentes, **caractérisé en ce que** l'étape de modification du programme de traitement comprend un ajustement d'un ou plusieurs paramètres laser et/ou du guidage laser en fonction de l'épaisseur de couche mesurée.

5. Procédé de traitement d'une ébauche de pièce à usiner multicouche au moyen d'un faisceau laser selon la revendication 1 ou 2, **caractérisé en ce que** l'étape de modification du programme de traitement comprend l'étape d'ajustement de l'épaisseur de couche d'abrasion via le laser.

6. Procédé de traitement d'une ébauche de pièce à usiner multicouche au moyen d'un faisceau laser selon l'une des revendications précédentes, **caractérisé en ce que** l'ébauche de pièce à usiner est une ébauche de plaque tranchante revêtue d'un matériau dur et le procédé comprend l'étape de détermination de la position de bords d'un bord tranchant de l'ébauche de plaque tranchante avant la mesure de l'épaisseur de couche, dans lequel les étapes de mesure et de traitement sont réalisées dans la même position de l'ébauche de pièce à usiner serrée.

7. Dispositif de traitement laser destiné à traiter une ébauche de pièce à usiner multicouche au moyen d'un faisceau laser avec
un équipement de mémorisation pour mémoriser un programme de traitement prédéfini afin de traiter l'ébauche de pièce à usiner en fonction d'une géométrie d'abrasion en vue de produire une géométrie de bords et/ou de surfaces souhaitée via un traitement laser ;
un équipement de commande pour exécuter le programme de traitement afin de traiter l'ébauche de pièce à usiner en fonction d'une géométrie d'abrasion en vue de produire une géométrie de bords et/ou de surfaces libres souhaitée via un traitement laser ;
un équipement de serrage pour serrer l'ébauche de pièce à usiner, le dispositif de traitement laser est **caractérisé par** :
un équipement de positionnement pour positionner le porte-pièce à usiner dans une position de mesure ;
un équipement de mesure pour mesurer une épaisseur d'au moins une couche de l'ébauche de pièce à usiner multicouche ;
un équipement pour modifier le programme de traitement mémorisé dans l'équipement de mémorisation afin de traiter l'ébauche de pièce à usiner multicouche en fonction de l'épaisseur de couche mesurée dans des conditions de géométrie d'abrasion constante ; et
un équipement laser pour traiter la pièce à usiner serrée en utilisant le programme de traitement modifié au moyen d'un laser afin de produire la géométrie de bords et/ou de surfaces (12, 13) souhaitée.

8. Équipement laser destiné à traiter une ébauche de pièce à usiner multicouche selon la revendication 7, **caractérisé en ce que** l'équipement de mesure pour mesurer l'épaisseur de couche et/ou l'équipement laser pour traiter l'ébauche de pièce à usiner serrée peut être basculé par rapport à l'équipement de serrage selon une valeur angulaire allant jusqu'à 120°.

9. Dispositif de traitement laser destiné à traiter une ébauche de pièce à usiner multicouche selon la revendication 7 ou 8, **caractérisé en ce que** l'équipement de commande (16) est aménagé pour réaliser simultanément un traitement laser et une mesure de l'ébauche de pièce à usiner quant à l'épaisseur de couche et/ou la position de bords et/ou la situation relative.

10. Dispositif de traitement laser destiné à traiter une ébauche de pièce à usiner multicouche selon l'une des revendications 8 ou 9, **caractérisé en ce que**, pour modifier le programme de traitement mémorisé dans l'équipement de mémorisation, l'équipement (18) est conçu pour ajuster automatiquement le programme de traitement mémorisé dans l'équipement de mémorisation (17) à l'épaisseur de couche mesurée, dans lequel les paramètres laser, le guidage laser, le réglage laser et/ou l'épaisseur des couches d'abrasion sont ajustées via le laser en fonction de l'épaisseur de couche après mesure de l'épaisseur de couche de matériau.
